# EUROPEAN PATENT SPECIFICATION

(11) **EP 2 720 858 B1**
(45) Date of publication and mention of the grant of the patent: **06.04.2016**
(21) Application number: 12738193.7
(22) Date of filing: 08.06.2012
(51) Int. Cl.: B29D 30/46

(54) **PROCESS AND APPARATUS FOR BUILDING TYRES FOR VEHICLE WHEELS**
VERFAHREN UND VORRICHTUNG ZUR HERSTELLUNG VON REIFEN FÜR FAHRZEUGRÄDER
PROCEDE ET APPAREIL POUR LA CONFECTION DES PNEUS POUR DES ROUES DE VEHICULES

(30) Priority: 17.06.2011 IT MI20111091; 27.06.2011 US 201161501337 P
(43) Date of publication of application: 23.04.2014
(73) Proprietor: Pirelli Tyre S.p.A., 20126 Milano (IT)
(72) Inventor: PORTINARI, Gianni, 20126 Milano (IT); PULICI, Lorenzo, 20126 Milano (IT)
(74) Representative: Tirloni, Bartolomeo
(86) International application number: PCT/IB2012/052905
(87) International publication number: WO 2012/172462

(56) References cited:
- EP-A1- 1 902 819
- WO-A2-2008/105655
- FR-A5- 2 036 572
- US-A- 4 922 774
- US-A1- 2006 070 504

## Description

### Field of the invention

The present invention relates to a process and an apparatus for building tyres for vehicle wheels.

In particular, within the scope of said process and apparatus, the present invention concerns cutting of a rubber-coated ribbon intended for building a tyre for vehicle wheels. Preferably this cut rubber-coated ribbon is used for making belt strips in a tyre for vehicle wheels.

### Background art

A tyre for vehicle wheels generally comprises a carcass structure including at least one carcass ply having end flaps in engagement with respective annular anchoring structures, each being usually formed with at least one substantially circumferential annular insert onto which at least one filling insert radially tapering away from the rotation axis is applied. Associated at a radially external position with the carcass structure is a belt structure comprising one or more belt layers placed in a radially superposed relationship with each other and with the carcass ply and provided with textile or metallic reinforcing cords having crossed orientation and/or being substantially parallel to the circumferential extension direction of the tyre. A tread band is applied at a radially external position to the belt structure, said tread band too being of elastomeric material like other semifinished products constituting the tyre. A so-called "under-layer" of elastomeric material can be interposed between the tread band the belt structure, said under-layer having properties adapted to ensure steady union of the belt structure with the tread band. In addition, respective sidewalls of elastomeric material are applied to the side surfaces of the carcass structure, each extending from one of the side edges of the tread band until close to the respective annular anchoring structure to the beads. In tyres of the "tubeless" type, the carcass ply is fully coated with a layer of a preferably butyl-based elastomeric material, usually referred to as "liner", which has optimal features in terms of air-tightness and extends from one of the beads to the other.

It should be pointed out, to the aims of the present specification and the following claims, that the term "elastomeric material" is understood as indicating a composition comprising at least one elastomeric polymer and at least one reinforcing filler. Preferably, this composition further comprises additives such as a cross-linking and/or plasticizing agent, for example. Due to the presence of the cross-linking agent, this material can be cross-linked by heating so as to form the final manufactured article.

It should be also pointed out, to the aims of the present specification and the following claims, that by the term "rubber-coated ribbon" it is intended a ribbon-like element formed with a plurality of textile or metallic reinforcing cords, substantially parallel to each other, coated with or embedded in an elastomeric material and inclined by an angle different from zero relative to a longitudinal extension direction of the rubber-coated ribbon itself.

Document WO 03/035379 in the name of the same Applicant discloses a method and an apparatus for cutting a fabric strip coated with elastomeric material and comprising a plurality of reinforcing cords particularly used for building reinforcing semifinished products, such as a reinforcing belt adapted to form a belt structure, for a green tyre. The method comprises the steps of: forming an incision of predetermined length and extending between two adjacent cords along a cutting direction by a punch cooperating with a counter-blade; inserting at least one cutting blade through the incision; carrying out a first and a second cut of the strip by moving the blade along the cutting direction over a first portion extending between the incision and a first side edge of the strip and over a second portion extending between the incision and a second side edge of the strip.
Document WO 2008/105655 discloses a device for cutting an elastomeric component intended for manufacturing a tyre belt. The device comprises a roller conveyor including a plurality of parallel rollers mutually spaced away and carrying the elastomeric component along a conveying direction. The cutting device comprises a knife for cutting the component with a cutting angle relative to the conveying direction. The knife is shiftable on a guide relative to the conveyor and forms an angle with the conveying direction which is adjustable within a range of values included between 18° and 34°. The cutting device is provided with a lifting beam extending transversely relative to the conveying direction between two transport rollers. The beam is vertically movable to lift the elastomeric component during the cut.
US 2006/0070504-A and US 4922774-A disclose cutting an elastomeric strip to proper length for tyre production.

### Summary of the invention

Within this field, the Applicant has felt the necessity to improve the quality of the segments of predetermined length obtained from cutting the rubber-coated ribbon, reference being particularly made to finishing of the cut edges, so as to improve the overall quality of the tyres produced with these segments.

The Applicant has in fact noticed that an inaccurate cut that is not perfectly parallel to the reinforcing cords, can damage the cords themselves, causing the final ends of said cords to open out or said cords to break and/or give rise to segments in which one or more cords emerge from the elastomeric matrix.

The Applicant has further noticed that finishing of the cut edges can be uneven because, if during the cutting operation the rubber-coated ribbon is too taut, it tends to stretch and get torn in the region on which the knife acts.

These defects have repercussions on the quality of the finished tyre and the functional character of the machines handling the cut segments for producing the green tyre to be vulcanised.

The Applicant has perceived that the above mentioned drawbacks could be solved by a process and an apparatus for building tyres for vehicle wheels in which cutting of the rubber-coated ribbon gives rise to clear and accurate separation between two segments in succession at a cutting line interposed between two adjacent reinforcing cords.

The Applicant has therefore found that if during cutting, the region of the rubber-coated ribbon that is in the vicinity of the cutting line is loose enough in the feeding direction of said ribbon, which direction is coincident with the longitudinal extension direction of the rubber-coated ribbon, this result can be achieved.

In particular, in accordance with a first aspect, the present invention relates to a process for building tyres for vehicle wheels as defined in claim 1, the process comprising: forming at least one component of the tyre on a forming drum, wherein said component is formed by:
- feeding a rubber-coated ribbon onto a conveyor along a feeding direction coincident with a longitudinal extension direction of said rubber-coated ribbon, until exceeding a cutting region of said conveyor by a predetermined length; the rubber-coated ribbon comprising a plurality of parallel reinforcing cords, embedded in a matrix of elastomeric material and inclined by a predetermined angle relative to the longitudinal extension direction;
- lifting a locating element placed under the rubber-coated ribbon and at the cutting region until lifting of the rubber-coated ribbon occurs;
- moving a knife, placed upon the rubber-coated ribbon and at the cutting region, along a cutting direction, for engraving and cutting the rubber-coated ribbon between two adjacent reinforcing cords and over the whole width thereof so as to form a segment;
- laying the segment on the forming drum;
wherein, before the cut, a first portion of the rubber-coated ribbon placed upstream of the locating element is moved forward by a predetermined stretch, so as to reduce the tension of said rubber-coated ribbon caused
by lifting of the locating element, wherein during said moving forward, the rubber-coated ribbon rolls on at least one roller belonging to the locating element.

In accordance with a second aspect, the present invention relates to an apparatus for building tyres for vehicle wheels as defined in claim 11, the apparatus comprising:
- a forming drum;
- a conveyor defining a rest surface for a rubber-coated ribbon and having a first part and a second part disposed consecutively along a feeding direction;
- a locating element placed between the first part and the second part, extending along a direction transverse to the feeding direction and vertically movable between a lowered position at which it lies under the rest surface, and a raised position at which it emerges beyond said rest surface;
- a knife mounted above the conveyor, at the locating element, and movable along an inclined trajectory relative to the feeding direction;
wherein the forming drum is operatively connected to the conveyor for receiving a segment of the rubber-coated ribbon cut by the knife;
wherein the first part of the conveyor is drivable independently of the second part;
wherein the locating element comprises a support and at least one roller mounted on the support. Preferred embodiments of the invention are defined in the dependent claims.

The Applicant thinks that moving the portion of rubber-coated ribbon placed upstream of the locating element towards and close to the portion placed downstream represents a help to the vertical displacement of said locating element and the region of rubber-coated ribbon in contact therewith, to such an extent that stretching of the rubber-coated ribbon, local modification of the ribbon's features or even tearing of same are avoided when the knife penetrate through it for cutting it.

The present invention, in at least one of the above aspects, can have one or more of the preferred features described hereinafter.

According to a preferred embodiment of the process, during moving forward of the first portion, a second portion of the rubber-coated ribbon placed downstream of the locating element is stationary.

The second portion downstream is already positioned in a correct manner for cutting a segment of length corresponding to that of the tyre component to be laid on the forming drum.

Preferably, moving forward of the first portion comprises: actuating a first part of the conveyor placed upstream of the locating element in a manner independent of a second part of said conveyor placed downstream of said locating element.

Actuation of this forward movement is therefore relatively simple.

Preferably, the predetermined stretch is substantially equal to the elongation suffered by the rubber-coated ribbon by effect of lifting of the locating element.

The vertical displacement and the predetermined horizontal displacement give rise to formation in the rubber-coated ribbon of a hump of such a shape and taut enough to enable the knife to engrave and cut the ribbon without stretching it.

Preferably, the predetermined stretch is included between about 10 mm and about 100 mm.

According to the invention, during said forward movement, the rubber-coated ribbon rolls on at least one roller belonging to the locating element.

Due to the presence of the roller, dangerous dragging along of the rubber-coated ribbon on the locating element exactly during this local moving forward step is avoided, because said region of rubber-coated ribbon in contact with the roller and the roller itself roll on each other without important relative slipping.

According to a preferred embodiment of the process, during movement along the cutting direction, the knife passes between two idler rollers belonging to the locating element.

In this way, the knife does not interfere with the locating element and can freely penetrate through the rubber-coated ribbon exactly at the lifted region.

Preferably, after the cut, the segment of the rubber-coated ribbon is moved away from the cutting region.

Preferably, during moving away a just cut end of the segment rolls on one of said two idler rollers.

The cut ribbon is separated into two segments, one upstream and one downstream. Each of the two complementary cut ends of the two segments is tapered and lies on only one of the two idler rollers. Therefore, the segment downstream can be moved away without relative slipping because its cut end rolls on the respective roller, while the segment upstream is stationary and the cut end thereof lies immobile on the respective roller.

Preferably, the rubber-coated ribbon is laterally shifted for centring it relative to the forming drum that is placed more downstream.

This expedient helps in ensuring the correct positioning of the cut segment on the forming drum.

According to a preferred embodiment of the process, laying the segment on the forming drum comprises:
- winding the segment around a radially external surface of the forming drum;
- mutually joining opposite ends of said segment.

The segment carries out only one turn around the forming drum, finally having a tubular shape.

Preferably, the rubber-coated ribbon is unwound from a reel. The rubber-coated ribbon, previously built and wound on a reel, after being possibly associated with a service fabric capable of preventing the ribbon coils from sticking against each other, is kept in this way until it has to be used in the process according to the invention.

Preferably, the tyre component is a belt strip.

Preferably, said predetermined angle is included between about 15° and about 35°.

Preferably, said cutting direction is parallel to said reinforcing cords. Preferably, the reinforcing cords are metal cords.

The process enables a belt structure to be made which has preferably oblique metal cords. Should several superposed belt strips be provided, the cords of a belt strip preferably cross those of another strip.

According to a preferred form of the apparatus, said at least one roller is an idler roller. The roller rolls on the rubber-coated ribbon because it is driven in rotation by the movement of the rubber-coated ribbon itself.

Preferably, said at least one roller extends over the whole width of the conveyor. The roller can therefore support rubber-coated ribbons of different widths without dragging.

Preferably, the locating element comprises two rollers the rotation axes of which are substantially consecutively aligned along said transverse direction.

Each of the two rollers, after the cut, receives the end of only one of the two segments of rubber-coated ribbon resting thereon and can therefore follow the movement of same irrespective of the movement of the other end.

Preferably, each of the two rollers is idly mounted on the support in a manner independent of the other.

Immediately after the cut, each roller rolls on the rubber-coated ribbon in a manner independent of the other when it is driven in rotation by the movement of the respective segment.

Preferably, the two rollers confine a passageway between them for the knife. This passageway is obtained by a simple and functional structure of the locating element.

According to a preferred embodiment, each of the two parts comprises a conveyor belt. The rubber-coated ribbon is continuously supported on each of the two parts of the conveyor belt that prevent it from becoming deformed downwards under the action of its own weight.

Preferably, each of the two parts comprises a continuous support surface, on which the conveyor belt runs. Consequently, the conveyor belts are able to support the rubber-coated ribbon without deforming.

Preferably, the continuous support surface comprises magnets. In case of rubber-coated ribbon with metallic cords, the magnets steadily retain said rubber-coated ribbon before and after the cut.

Preferably, the magnets are embedded in the continuous support surface. Therefore, the continuous support surfaces offer a smooth and continuous rest surface to the conveyor belts and the rubber-coated ribbon.

Preferably, the inclined trajectory of the knife and the feeding direction delimit an inclination angle included between about 15° and about 35°.

Preferably, the trajectory inclination is adjustable.

The knife can cut a variety of rubber-coated ribbons provided with cords inclined to different angles. Preferably, the knife has two opposite recesses disposed along the inclined trajectory and provided with cutting edges.
The knife is able to cut the rubber-coated ribbon moving in the two ways along the inclined cutting trajectory. Preferably, the knife penetrates through the rubber-coated ribbon at a mid-line point of the rubber-coated ribbon placed at the passageway delimited by the two rollers, moves forward, while cutting, towards an edge of the rubber-coated ribbon until it disengages from the rubber-coated ribbon, then moves back as far as it engages the rubber-coated ribbon again at the same mid-line point and goes on moving back, while cutting, until the opposite edge.

Preferably, the apparatus comprises an aligning device adapted to laterally shift the conveyor for centring the rubber-coated ribbon relative to the forming drum that is placed more downstream.

Preferably, the aligning device comprises:
- a sensor disposed between the second conveyor belt and the third conveyor belt and adapted to detect the lateral position of the rubber-coated ribbon;
- an actuator operatively connected to the sensor and acting on the conveyor.

Preferably, the apparatus comprises a reel placed upstream of the conveyor and carrying the rubber-coated ribbon wound thereon.

Preferably, the apparatus comprises a pre-centring device disposed between the reel and the conveyor and supporting the rubber-coated ribbon; said pre-centring device being laterally shiftable for adjusting the position of said rubber-coated ribbon relative to the conveyor.

The aligning and pre-centring devices enable the ribbon to be maintained in the correct position along the whole travel thereof from the reel until its position on the forming drum, so that a very precise cutting operation and a precise deposition can be carried out.

Further features and advantages will become more apparent from the detailed description of a preferred but not exclusive embodiment of a process and an apparatus for building tyres for vehicle wheel, in accordance with the present invention.

### Brief description of drawings

This description will be set out hereinafter with reference to the accompanying drawings, given by way of non-limiting example, in which:
- Fig. 1 diagrammatically shows an elevation side view of an apparatus according to the invention;
- Fig. 2 is an enlarged perspective view of a portion of the apparatus in Fig. 1;
- Fig. 3a is a fragmentary side view of the apparatus in Fig. 1;
- Figs. 3b-3c depict the portion of Fig. 2 in elevation side view and in a sequence of operating configurations;
- Figs. 4a and 4b show the portion in Fig. 2 in top views and in different operating configurations;
- Fig. 5 shows a radial half-section of a tyre built using the apparatus according to the invention;
- Fig. 5a shows an element of the tyre in Fig. 5 sectioned in a radial plane.

### Detailed description of preferred embodiments of the invention

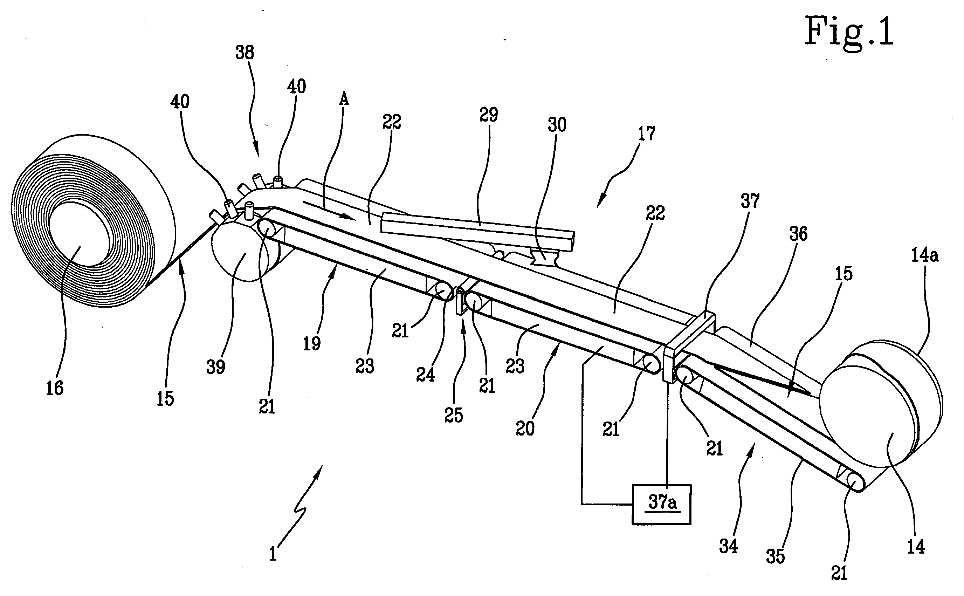

With reference to Fig. 1, an apparatus for building tyres for vehicle wheels in accordance with the present invention has been generally identified by reference numeral 1.

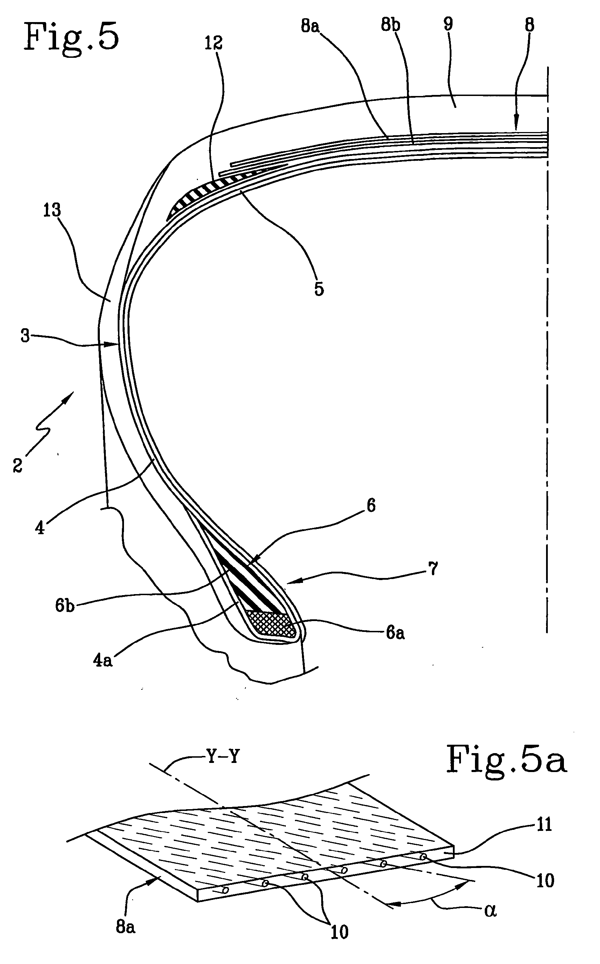

A tyre 2 manufactured in a plant comprising said apparatus and following the process in accordance with the present invention is shown in Fig. 5 and it essentially comprises a carcass structure 3 having at least one carcass ply 4. An air-tight layer of elastomeric material or a so-called "liner" 5 can be applied to the inside of the carcass ply/plies 4. Two annular anchoring structures 6, each comprising a so-called bead core 6a carrying an elastomeric filler 6b at a radially external position, are in engagement with respective end flaps 4a of the carcass ply/plies 4. The annular anchoring structures 6 are integrated in the vicinity of regions usually identified as "beads" 7, at which usually engagement between the tyre 2 and a respective mounting rim occurs. A belt structure 8 comprising several belt layers 8a, 8b, is circumferentially applied around the carcass ply/plies 4, and a tread band 9 circumferentially overlaps the belt structure 8.

As shown in Fig. 5a, each belt layer 8a, 8b comprises a plurality of textile or metallic reinforcing cords 10, parallel to each other, embedded in a matrix of elastomeric material 11 and inclined by a predetermined angle "α" relative to the circumferential extension direction "Y-Y" of tyre 2. The reinforcing cords 10 of two adjacent belt layers 8a, 8b preferably cross each other.

So-called "under-belt inserts" 12 can be associated with the belt structure 8; they are each placed between the carcass ply/plies 4 and one of the axially opposite end edges of the belt structure 8. Two sidewalls 11, each extending from the corresponding bead 7 to a corresponding side edge of the tread band 9, are applied at laterally opposite positions onto the carcass ply/plies 4.

Said components of tyre 2 are manufactured on one or more building drums shifting said building drums between different work stations at each of which suitable devices apply the different semifinished products to the building drum/drums.

In a preferred embodiment, the plant comprises a carcass-building line, at which one or more building drums are sequentially moved between different work stations designed to form on each building drum, a carcass sleeve comprising the carcass ply/plies 4, liner 5, the annular anchoring structures 6 and possibly at least part of the sidewalls 13.

At the same time, in an outer-sleeve building line, one or more forming drums 14 are sequentially moved between different work stations designed to form, on each forming drum 14, an outer sleeve comprising at least the belt structure 8, tread band 9, and possibly at least part of the sidewalls 13.

The plant further comprises an assembling station at which the outer sleeve is removed from the auxiliary drum to be coupled with the carcass sleeve.

The built tyres 2 are sequentially transferred to at least one vulcanisation unit, not shown.

The apparatus 1 shown in Fig. 1 is provided for cutting to size a rubber-coated ribbon 15 into a segment and for wrapping it around a radially external surface 14a of a forming drum 14 so as to form one of said belt layers 8a, 8b.

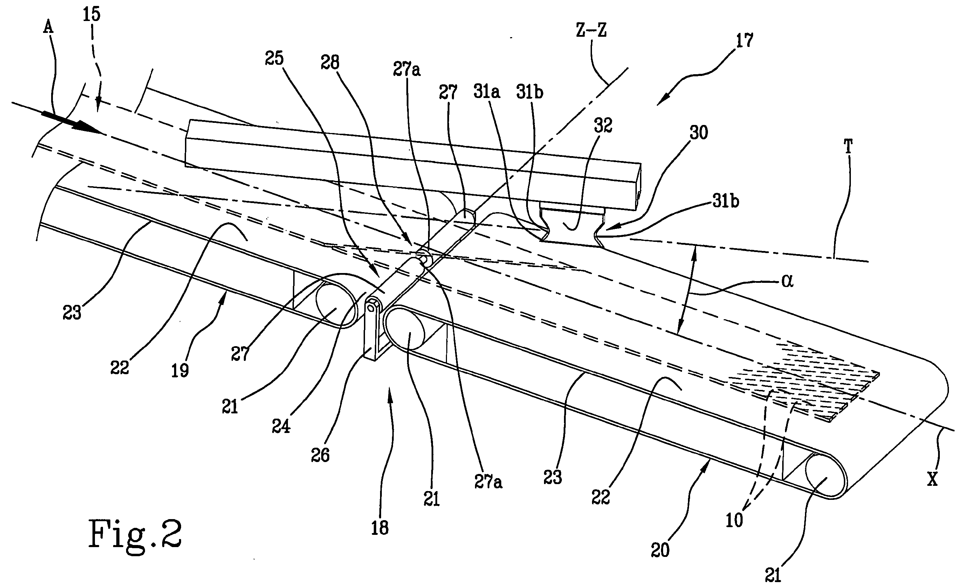

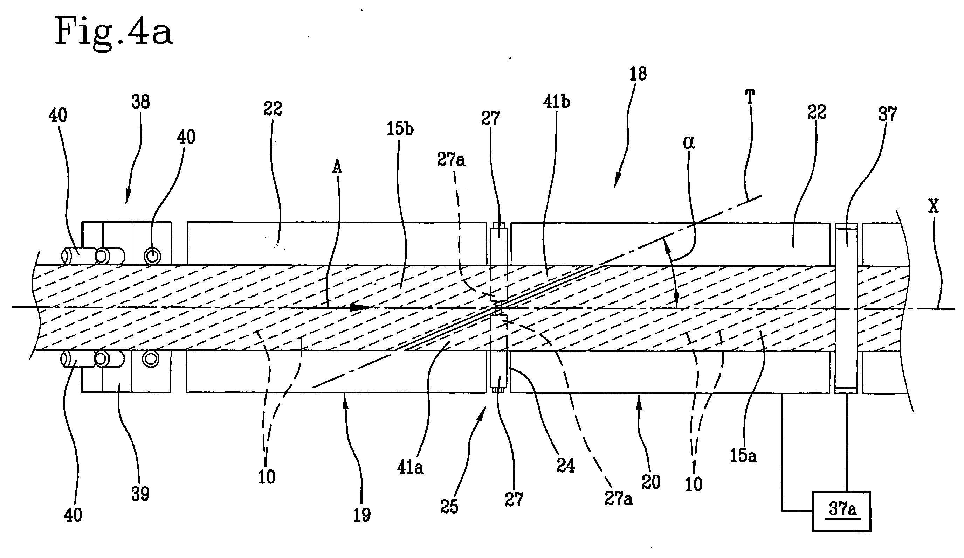

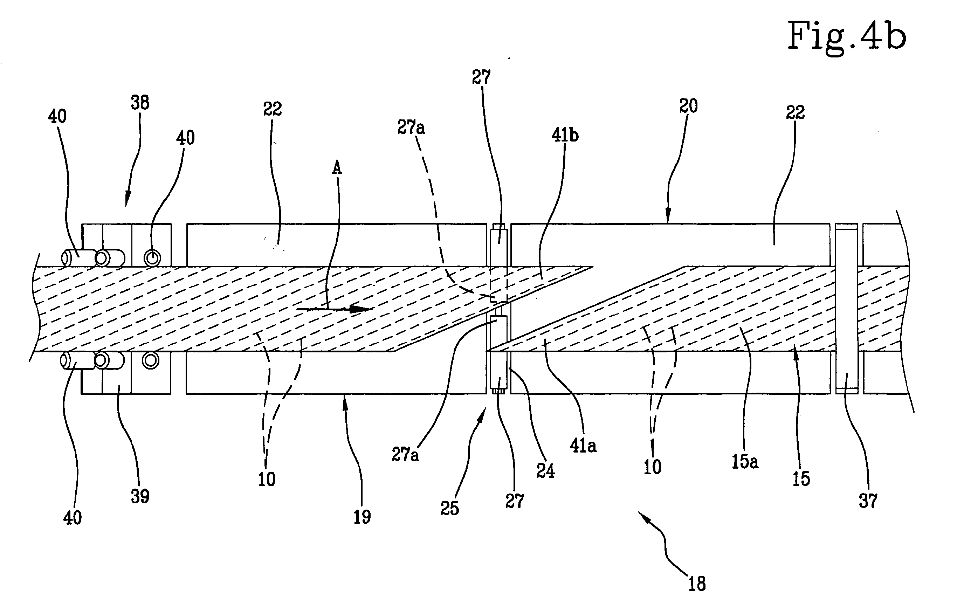

The rubber-coated ribbon 15 therefore comprises a plurality of said parallel reinforcing cords 10, embedded in the matrix of elastomeric material 11 and inclined by the predetermined angle "α" relative to the longitudinal extension direction "X" of the rubber-coated ribbon 15 itself (Figs. 2, 4a and 4b) that in the finished tyre corresponds to said direction "Y-Y".

Apparatus 1 illustrated in Fig. 1 comprises a reel 16, on which the rubber-coated ribbon 15 is wound and stored and a cutting device 17 disposed downstream of the reel 16 and upstream of the forming drum 14 relative to a feeding direction "A" of ribbon 15 (which is coincident with said longitudinal extension direction "X").

The cutting device 17 comprises a conveyor 18 consisting of a first part 19 and a second part 20 including a first conveyor belt and a second conveyor belt respectively that are disposed consecutively one after the other along said feeding direction "A". Each of the two conveyor belts 19, 20 is wrapped on pulleys 21 moved by preferably "brushless" motors and has an upper rest surface 22 that, resting on a continuous support surface 23, slides in the feeding direction "A". The conveyor 18 is able to support and carry rubber-coated ribbons 15 of a width reaching about 350 mm, preferably until about 400 mm.

The first and second conveyor belts 19, 20 delimit a slit 24 between them that extends over the whole width of the conveyor 18 and at which the rubber-coated ribbon 15 does not rest on the upper rest surfaces 22. Slit 24 extends along a direction orthogonal to the feeding direction "A".

At this slit 24, a locating element 25 lies which can be shifted along a vertical direction between a first position and a second position. The locating element 25 comprises a support 26 on which two rollers 27 are idly mounted, in a manner independent of each other. The two rollers 27 are aligned along the slit 24 and have a common rotation axis "Z-Z" (Fig. 2). An actuator 25a is able to move the support 26 together with the two rollers 27 between the first position and the second position.

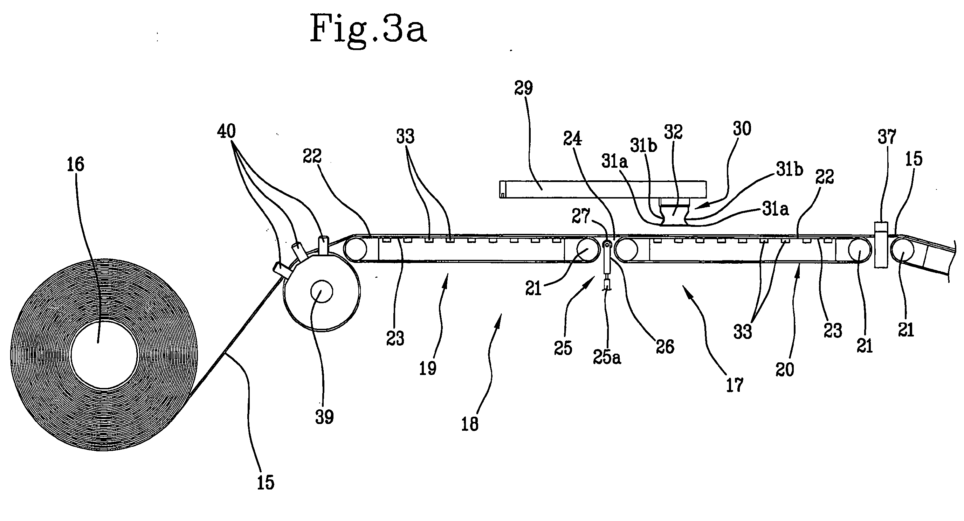

In the first position, or lowered position (Figs. 1 and 3a), the two rollers 27 are retracted inside the slit 24 or, in other words, an upper end surface of the two rollers 27 lies under the imaginary rest surface obtained by extension of the upper rest surface 22 of the conveyor belts 19, 20.

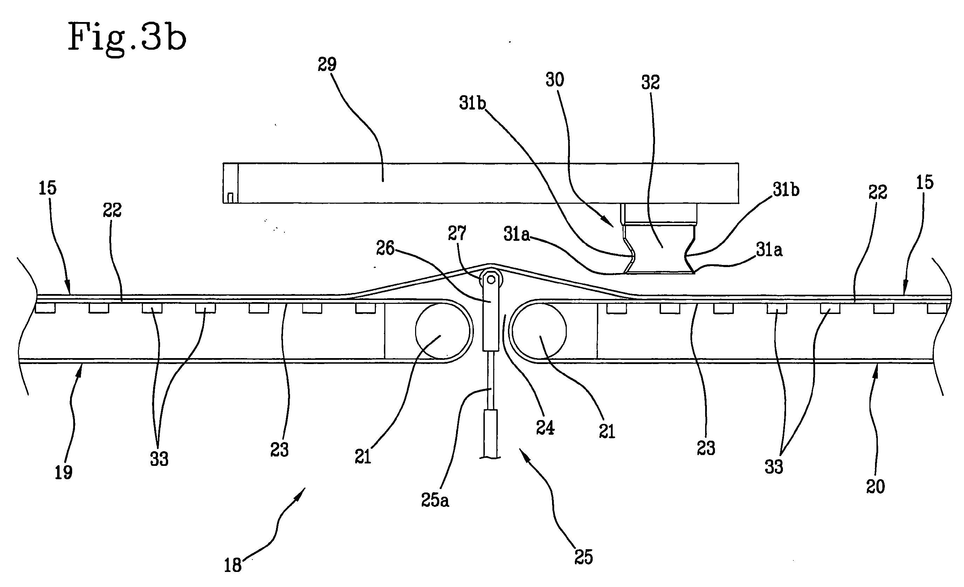

In the second position, or raised position (Figs. 3b-3e), the two rollers 27 emerge upwards from the slit 24 or, in other words, project beyond the imaginary rest surface obtained by extension of the upper rest surface 22 of the conveyor belts 19. 20.

Mutually facing final ends 27a of the two rollers 27 delimit a passageway 28 constituting a break of the radially peripheral surface of the two rollers 27 (Figs. 2, 4a and 4b).

Positioned over conveyor 18 is a beam-shaped straight guide 29, for a knife 30. Guide 29 extends along a straight cutting direction "T" corresponding to the line along which the rubber-coated ribbon 15 has to be cut (Figs. 2 and 4a). Guide 29 is therefore inclined to the longitudinal extension "X" of the rubber-coated ribbon 15 (and to the feeding direction "A") by the predetermined inclination angle "α" of the reinforcing cords 10. More specifically, the cutting direction "T" passes through the mid-line of the rubber-coated ribbon 15 and the conveyor 18 at said passageway 28 between rollers 27, as clearly seen in the plan view of Fig. 4a. The beam inclination can be adjusted in a continuous manner for cutting ribbons with cords 10 inclined by from about 15° to about 35°, preferably from about 20° to about 30°.

Knife 30, preferably of the hot blade type, extends downwards and towards conveyor 18 starting from guide 29 and can translate, moved by a motor not shown, on guide 29 along the cutting direction "T" and in both ways. Knife 30 has a "butterfly-shaped" symmetric form with two cutting edges extending on opposite sides of a central body 32 of the knife 30 itself which are coincident with the cutting directions. Each cutting edge comprises an incision tip 31a and a recess 31b formed in an upper position relative to the incision tip 31a (Figs. 2 and 3a).

Inserted in the continuous support surface 23 of each of the conveyor belts 19, 29, flush with the sliding surface of the respective conveyor belt 19, 20, are magnets 33 (Figs. 3a-3e) the function of which is to retain the rubber-coated ribbon 15 when the latter comprises metallic cords 10.

As shown in Fig. 1, an auxiliary conveyor 34 is disposed downstream of the second conveyor belt 20 and it is defined by a third conveyor belt 35 wrapped on powered pulleys 21. An upper conveying surface 36 of the third conveyor belt 35 is inclined downwards starting from the second conveyor belt 20. The forming drum 14 is positioned over a distal portion of the third conveyor belt 35 and its radially external surface 14a faces and is disposed close to the upper conveying surface 36. The auxiliary conveyor 34 too is preferably provided with magnets, not shown, the function of which is to retain the rubber-coated ribbon 15 provided with metallic cords 10.

A sensor 37 is disposed between the second conveyor belt 20 and the third conveyor belt 35, which sensor is able to detect the lateral position, i.e. transversal to the feeding direction "A", of the rubber-coated ribbon 15 through an identification system of the edges of the rubber-coated ribbon 15 itself. Sensor 37 is operatively connected to an actuator 37a, only diagrammatically shown in Figs. 1 and 4a, acting on the conveyor 18 and able to laterally shift conveyor 18, based on processing of the signal received from sensor 37, so that the mid-line of the rubber-coated ribbon 15 will correspond to the mid-line of the forming drum 14 on which it will be laid down. Sensor 37 and actuator 37a therefore are part of an aligning device.

In the preferred embodiment shown, also disposed between the reel 16 and first conveyor belt 19 is a pre-centring device 38 comprising a frame 39 provided with support elements, not shown, on which the rubber-coated ribbon 15 coming from the reel 16 slides, and with candle rollers 40 idly mounted on frame 39 around axes perpendicular to the rubber-coated ribbon 15 and disposed on both sides thereof. Frame 39 can be laterally shifted, i.e. in a transverse direction to the feeding direction "A", to adjust the position of the rubber-coated ribbon 15 relative to conveyor 18.

In use and in accordance with the process of the invention, the rubber-coated ribbon 15 provided with metallic reinforcing cords 10 is unwound from reel 16 and first rests on the pre-centring device 38 and then on the upper rest surface 22 of the first conveyor belt 19, retained by magnets 33. The locating element 25 is in the first lowered position. The first and second conveyor belts 19, 20 are driven in synchronism so as to move at the same speed and cause advancing of the rubber-coated ribbon 15 until bringing one end thereof in the vicinity of the third conveyor belt 35. At this point centring of the rubber-coated ribbon 15 by the aligning device starts, relative to the third conveyor belt 35 and the forming drum 14 placed more downstream.

Subsequently, the first, second and third conveyor belts 19, 20, 35 are driven together, so as to move at the same speed and cause advancing of the rubber-coated ribbon 15 beyond the slit 24 by a predetermined length "L" substantially corresponding to the circumferential extension of the forming drum 14. At the end of this advancing, the portion of rubber-coated ribbon 15 of length "L" lies in part on the second conveyor belt 20 and in part on the third conveyor belt 35 (Figs. 1 and 3a).

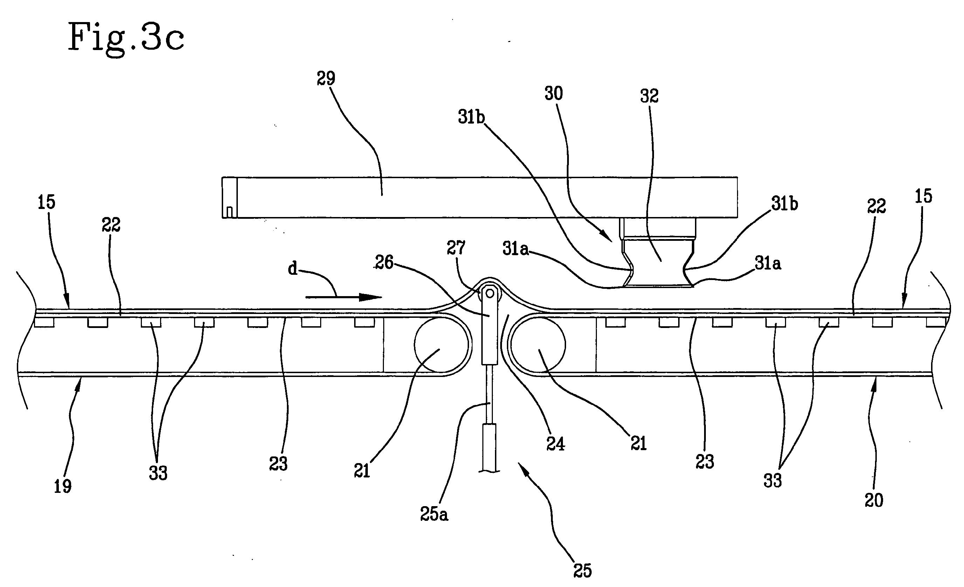

The conveyor belts 19, 20 and 35 being immobile, the locating element 25 is lifted to the second position (Fig. 3b). Rollers 27 go and bear against a lower surface of the rubber-coated ribbon 15 and push it upwards. Just before, during, or just after this vertical movement, the first conveyor belt 19 is driven in an independent manner to cause advancing of a first portion of the rubber-coated ribbon 15 placed upstream of the locating element 25 by a predetermined stretch "d" while the second conveyor belt 20 is maintained stationary (Fig. 3c). This advancing causes formation of a hump helping the vertical displacement of the locating element 25 and preventing generation of tensile stresses inside the rubber-coated ribbon 15 itself. Said predetermined stretch "d" is substantially equal to the elongation of the rubber-coated ribbon 15 due to vertical displacement of the locating element 25.

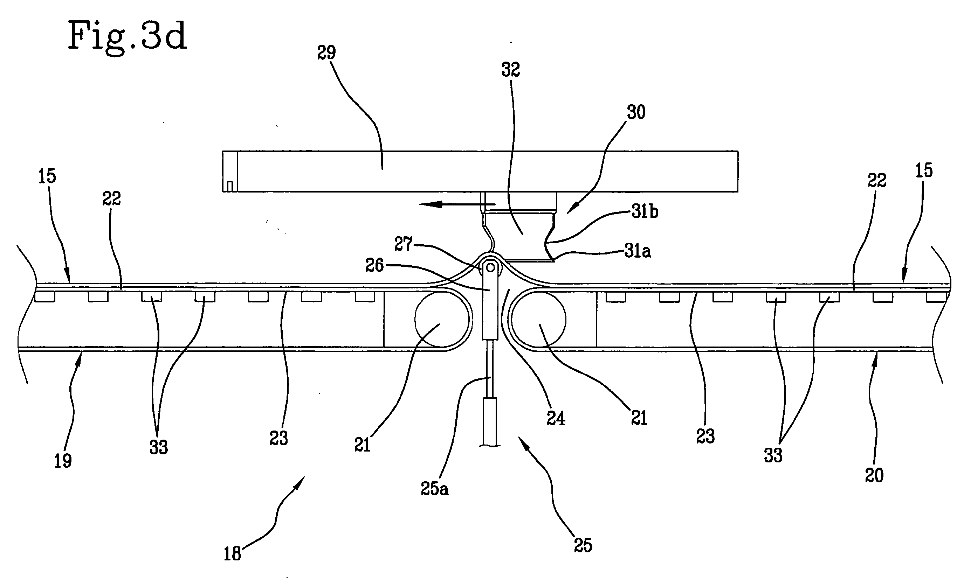

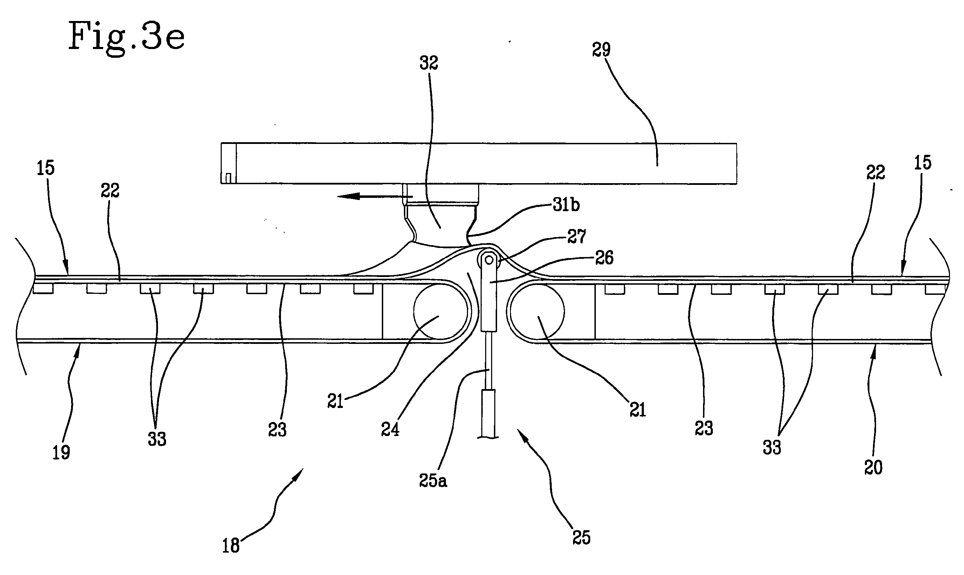

At this point, knife 3 hitherto disposed at a peripheral region of guide 29, is shifted along the cutting direction "T" in a first way until the tip 31a of one of the cutting edges makes an incision on the rubber-coated ribbon 15, on the hump and at the passageway 28 between rollers 27 (Fig. 3d). The tip 31a penetrates through the rubber-coated ribbon and partly lifts it disposing it in the recess 31b and cutting goes one from the mid-line, until a first lateral edge of same is reached (Fig. 3e). The knife 30 cuts the elastomeric material by its movement between two reinforcing cords 10 in a direction parallel thereto. Subsequently, knife 30 comes back still moving along the cutting direction "T" but in a second way, opposite to the first one, and the tip 31a of the cutting edge opposite to the one hitherto in operation engages the rubber-coated ribbon 15 still at the lifted portion and at the passageway 28 between rollers 27. The tip 31a partly lifts the rubber-coated ribbon 15 disposing it in the recess 31b and goes on cutting it from the mid-line, until a second lateral edge thereof is reached. The rubber-coated ribbon 15 is now separated into two segments (Fig. 4a). One segment downstream 15a of the cutting region has the above mentioned length "L" while one segment upstream 15b is wound up on reel 16. A tapered end 41a of the segment downstream 15a rests on only one of the two rollers 27 of the locating element 25 and the contiguous end 41b of the segment upstream 15b rests on the other of said two rollers 27 (Fig. 4a).

The second and third conveyor belts 20, 35 are driven while the first conveyor belt 19 remains stationary to bring the segment downstream 15a towards the forming drum 14 and dispose it thereon. During the first instants of this step, the tapered end 41a of the segment downstream 15a drives in rotation the respective roller 27 while the other roller 27 remains immobile together with the contiguous end 41b of the segment upstream 15b (Fig. 4b).

The forming drum 14 is laid against the segment downstream 15a and rolls thereon while said segment is caused to advance by the third conveyor belt 35 so as to determine wrapping of said segment 15a around the radially external surface 14a of the forming drum 14. The locating element 25 is lowered and the cycle is repeated for each segment.

All the above described movements are controlled, preferably in a fully automatic manner, by a control unit operatively connected to the motors of the conveyor belts 19, 20, 35, the actuators 25a of the locating element 25, the motor of knife 30, sensor 37 and the respective actuator 37a and possibly to other suitable sensors capable of detecting the position of the rubber-coated ribbon 15 and the moving parts of the apparatus.

## Claims

1. A process for building tyres for vehicle wheels, comprising:
forming at least one component of the tyre (2) on a forming drum (14), wherein said component is formed by:
- feeding a rubber-coated ribbon (15) onto a conveyor (18) along a feeding direction (A) coincident with a longitudinal extension direction (X) of said rubber-coated ribbon (15), until exceeding a cutting region of said conveyor (18) by a predetermined length (L); the rubber-coated ribbon (15) comprising a plurality of parallel reinforcing cords (10), embedded in a matrix of elastomeric material (11) and inclined by a predetermined angle (α) relative to the longitudinal extension direction (X);
- lifting a locating element (25) placed under the rubber-coated ribbon (15) and at the cutting region until lifting of the rubber-coated ribbon (15) occurs;
- moving a knife (30), placed upon the rubber-coated ribbon (15) and at the cutting region, along a cutting direction (T), for engraving and cutting the rubber-coated ribbon (15) between two adjacent reinforcing cords (10) and over the whole width thereof so as to form a segment (15a);
- laying the segment (15a) on the forming drum (14);
wherein, before the cut, a first portion of the rubber-coated ribbon (15) placed upstream of the locating element (25) is moved forward by a predetermined stretch (d), so as to reduce the tension of said rubber-coated ribbon (15) caused by lifting of the locating element (25),
wherein, during said moving forward, the rubber-coated ribbon (15) rolls on at least one roller (27) belonging to the locating element (25).

2. A process as claimed in claim 1, wherein, during moving forward of the first portion, a second portion of the rubber-coated ribbon (15) placed downstream of the locating element (25) is stationary.

3. A process as claimed in claim 1 or 2, wherein moving forward of the first portion comprises: actuating a first part (19) of the conveyor (18) placed upstream of the locating element (25) in a manner independent of a second part (20) of said conveyor (18) placed downstream of said locating element (25).

4. A process as claimed in one of the preceding claims, wherein the predetermined stretch (d) is substantially equal to the elongation suffered by the rubber-coated ribbon (15) by effect of lifting of the locating element (25).

5. A process as claimed in one of the preceding claims, wherein the predetermined stretch (d) is included between about 10 mm and about 100 mm.

6. A process as claimed in one of the preceding claims, wherein, during movement along the cutting direction (T), the knife (30) passes between two idler rollers (27) belonging to the locating element (25).

7. A process as claimed in one of the preceding claims, wherein, after the cut, the segment (15a) of the rubber-coated ribbon (15) is moved away from the cutting region.

8. A process as claimed in the preceding claim, wherein said at least one roller (27) is an idler roller and wherein during moving away a just cut end (41a) of the segment (15a) rolls on said idler roller (27).

9. A process as claimed in one of the preceding claims, wherein the rubber-coated ribbon (15) is laterally shifted for centring it relative to the forming drum (14) that is placed more downstream.

10. A process as claimed in one of the preceding claims, wherein laying the segment (15a) on the forming drum (14) comprises:
- winding the segment (15a) around a radially external surface (14a) of the forming drum (14);
- mutually joining opposite ends of said segment (15a).

11. An apparatus for building tyres for vehicle wheels, comprising:
- a forming drum (14);
- a conveyor (18) defining a rest surface (22) for a rubber-coated ribbon (15) and having a first part (19) and a second part (20) disposed consecutively along a feeding direction (A);
- a locating element (25) placed between the first part (19) and the second part (20), extending along a direction transverse to the feeding direction (A) and vertically movable between a lowered position at which it lies under the rest surface (22), and a raised position at which it emerges beyond said rest surface (22);
- a knife (30) mounted above the conveyor (18), at the locating element (25), and movable along an inclined trajectory (T) relative to the feeding direction (A);
wherein the forming drum (14) is operatively connected to the conveyor (18) for receiving a segment (15a) of the rubber-coated ribbon (15) cut by the knife (30);
wherein the first part (19) of the conveyor (18) is drivable independently of the second part (20);
wherein the locating element (25) comprises a support (26) and at least one roller (27) mounted on the support (26).

12. An apparatus as claimed in the preceding claim, wherein said at least one roller (27) is an idler roller.

13. An apparatus as claimed in claim 11 or 12, wherein said at least one roller (27) extends over the whole width of the conveyor (18).

14. An apparatus as claimed in claim 11, 12 or 13, wherein the locating element (25) comprises two rollers (27) the rotation axes (Z-Z) of which are substantially consecutively aligned along said transverse direction.

15. An apparatus as claimed in the preceding claim, wherein each of the two rollers (27) is idly mounted on the support (26) in a manner independent of the other.

16. An apparatus as claimed in claim 14 or 15, wherein the two rollers (27) confine a passageway (28) between them for the knife (30).

17. An apparatus as claimed in one of claims 11 to 16, wherein each of the two parts (19, 20) comprises a conveyor belt.

18. An apparatus as claimed in the preceding claim, wherein each of the two parts comprises a continuous support surface (23), on which the conveyor belt runs.

19. An apparatus as claimed in the preceding claim, wherein the continuous support surface (23) comprises magnets (33).

20. An apparatus as claimed in the preceding claim, wherein the magnets (33) are embedded in the continuous support surface (23).

21. An apparatus as claimed in one of claims 11 to 20, wherein the inclined trajectory (T) of the knife (30) and the feeding direction (A) delimit an inclination angle (α) included between about 15° and about 35°.

22. An apparatus as claimed in one of claims 11 to 21, wherein the trajectory (T) inclination is adjustable.

23. An apparatus as claimed in one of claims 11 to 22, wherein the knife (30) has two opposite recesses (31b) disposed along the inclined trajectory (T) and provided with cutting edges.

24. An apparatus as claimed in one of claims 11 to 22, comprising an aligning device (37, 37a) adapted to laterally shift the conveyor (18) for centring the rubber-coated ribbon (15) relative to the forming drum (14) that is placed more downstream.

25. An apparatus as claimed in the preceding claim, wherein the aligning device (37, 37a) comprises:
- a sensor (37) disposed between the second conveyor belt (20) and the third conveyor belt (35) and adapted to detect the lateral position of the rubber-coated ribbon (15);
- an actuator (37a) operatively connected to the sensor (37) and acting on the conveyor (18).

## Patentansprüche

1. Verfahren zur Herstellung von Reifen für Fahrzeugräder, das die folgenden Schritte umfasst:
Bilden zumindest einer Komponente des Reifens (2) an einer Formungstrommel (14), wobei die Komponente gebildet wird durch:
- Zuführen eines gummibeschichteten Bands (15) auf eine Fördereinrichtung (18) entlang einer Zuführuchtung (A), die mit einer Längserstreckungsrichtung (X) des gummibeschichteten Bands (15) zusammenfällt, bis ein Schnittbereich der Fördereinrichtung (18) um eine vorbestimmte Länge (L) überschritten wird; wobei das gummibeschichtete Band (15) eine Vielzahl von parallelen Verstärkungsdrähten (10) umfasst, die in eine Matrix aus Elastomermaterial (11) eingebettet sind und um einen vorbestimmten Winkel (α) relativ zu der Längserstreckungsrichtung (X) geneigt sind;
- Anheben eines Positionierelements (25), das unter dem gummibeschichteten Band (15) und an dem Schnittbereich platziert ist, bis das Anheben des gummibeschichteten Bands (15) erfolgt ist;
- Bewegen eines Messers (30), das auf das gummibeschichtete Band (15) und an dem Schnittbereich platziert wurde, entlang einer Schnittrichtung (T), zum Gravieren und Schneiden des gummibeschichteten Bands (15) zwischen zwei benachbarten Verstärkungsdrähten (10) und über die gesamte Breite desselben, um so ein Segment (15a) zu bilden;
- Auflegen des Segments (15a) auf die Formungstrommel (14);
wobei vor dem Schnitt ein erster Abschnitt des gummibeschichteten Bands (15) das dem Positionierelement (25) vorgeschaltet platziert ist, um einen vorbestimmten Betrag (d) vorwärts bewegt wird, um so die Spannung des gummibeschichteten Bands (15) zu verringern, die durch das Anheben des Positionierelements (25) verursacht wird;
wobei während der Vorwärtsbewegung das gummibeschichtete Band (15) auf zumindest einer Rolle (27) läuft, die zu dem Positionierelement (25) gehört.

2. Verfahren nach Anspruch 1, wobei während der Vorwärtsbewegung des ersten Abschnitts ein zweiter Abschnitt des gummibeschichteten Bands (15), der dem Positionierelement (25) nachgeschaltet positioniert ist, stationär ist.

3. Verfahren nach Anspruch 1 oder 2, wobei die Vorwärtsbewegung des ersten Abschnitts umfasst: Betätigen eines ersten Teils (19) der Fördereinrichtung (18), der dem Positionierelement (25) vorgeschaltet platziert ist, auf eine von einem zweiten Teil (20) der Fördereinrichtung (18), der dem Positionierelement (25) nachgeschaltet platziert ist, unabhängige Weise.

4. Verfahren nach einem der vorhergehenden Ansprüche, wobei der vorbestimmte Betrag (d) im Wesentlichen gleich der Ausdehnung ist, die das gummibeschichtete Band (15) durch den Effekt des Anhebens des Positionierelements (25) erfährt.

5. Verfahren nach einem der vorhergehenden Ansprüche, wobei der vorbestimmte Betrag (d) zwischen etwa 10 mm und etwa 100 mm eingeschlossen ist.

6. Verfahren nach einem der vorhergehenden Ansprüche, wobei während der Bewegung entlang der Schnittrichtung (T) das Messer (30) zwischen zwei Tragrollen (27) läuft, die zu dem Positionierelement (25) gehören.

7. Verfahren nach einem der vorhergehenden Ansprüche, wobei nach dem Schnitt das Segment (15a) des gummibeschichteten Bands (15) von dem Schnittbereich weg bewegt wird.

8. Verfahren nach dem vorhergehenden Anspruch, wobei die zumindest eine Rolle (27) eine Tragrolle ist, und wobei während der Wegbewegung ein gerade geschnittenes Ende (41a) des Segments (15a) auf der Tragrolle(27) läuft.

9. Verfahren nach einem der vorhergehenden Ansprüche, wobei das gummibeschichtete Band (15) seitlich verschoben wird, um es relativ zu der Formungstrommel (14), die weiter nachgeschaltet platziert ist, zu zentrieren.

10. Verfahren nach einem der vorhergehenden Ansprüche, wobei das Auflegen des Segments (15a) auf die Formungstrommel (14) umfasst:
- Wickeln des Segments (15a) um eine radial äußere Oberfläche (14a) der Formungstrommel (14);
- gegenseitiges Zusammenfügen der entgegengesetzten Enden des Segments (15a).

11. Vorrichtung zur Herstellung von Reifen für Fahrzeugräder, wobei die Vorrichtung umfasst:
- eine Formungstrommel (14);
- eine Fördereinrichtung (18), die eine Auflagefläche (22) für ein gummibeschichtetes Band (15) definiert und einen ersten Teil (19) und einen zweiten Teil (20) aufweist, die aufeinander folgend entlang einer Zuführrichtung (A) angeordnet sind;
- ein Positionierungselement (25), das zwischen dem ersten Teil (19) und dem zweiten Teil (20b) angeordnet ist, sich entlang einer Richtung quer zu der Zuführrichtung (A) erstreckt und vertikal zwischen einer abgesenkten Stellung, in der es unter der Auflagefläche (22) liegt, und einer angehobenen Stellung, in der es über die Auflagefläche (22) aufragt, beweglich ist;
- ein Messer (30), das über der Fördereinrichtung (18) an dem Positionierelement (25) montiert ist, und entlang einer geneigten Bahn (T) relativ zu der Zuführrichtung (A) beweglich ist;
wobei die Formungstrommel (14) mit der Fördereinrichtung (18) wirkverbunden ist, um ein Segment (15a) des gummibeschichteten Bands (15) aufzunehmen, das durch das Messer (30) geschnitten wurde;
wobei der erste Teil (19) der Fördereinrichtung (18) unabhängig von dem zweiten Teil (20) antreibbar ist;
wobei das Positionierelement (25) einen Träger (26) und zumindest eine an dem Träger (26) montierte Rolle (27) umfasst.

12. Vorrichtung nach dem vorhergehenden Anspruch, wobei die zumindest eine Rolle (27) eine Tragrolle ist.

13. Vorrichtung nach Anspruch 11 oder 12, wobei die zumindest eine Rolle (27) sich über die gesamte Breite der Fördereinrichtung (18) erstreckt.

14. Vorrichtung nach Anspruch 11, 12 oder 13, wobei das Positionierelement (25) zwei Rollen (27) umfasst, deren Drehachsen (Z-Z) im Wesentlichen aufeinander folgend entlang der Querrichtung ausgerichtet sind.

15. Vorrichtung nach dem vorhergehenden Anspruch, wobei jede der zwei Rollen (27) leerlaufend an dem Träger (26) auf voneinander unabhängige Weise montiert ist.

16. Vorrichtung nach Anspruch 14 oder 15, wobei die zwei Rollen (27) zwischen einander einen Durchlass (28) für das Messer (30) begrenzen.

17. Vorrichtung nach einem der Ansprüche 11 bis 16, wobei jeder der zwei Teile (19, 20) ein Förderband umfasst.

18. Vorrichtung nach dem vorhergehenden Anspruch, wobei jeder der zwei Teile eine durchgehende Tragfläche (23) umfasst, auf der das Förderband läuft.

19. Vorrichtung nach dem vorhergehenden Anspruch, wobei die durchgehende Tragfläche (23) Magnete (33) umfasst.

20. Vorrichtung nach dem vorhergehenden Anspruch, wobei die Magnete (33) in die durchgehende Tragfläche (23) eingebettet sind.

21. Vorrichtung nach einem der Ansprüche 11 bis 20, wobei die geneigte Bahn (T) des Messers (30) und die Zuführrichtung (A) einen Neigungswinkel (α) begrenzen, der zwischen etwa 15° und etwa 35° eingeschlossen ist.

22. Vorrichtung nach einem der Ansprüche 11 bis 21, wobei die Neigung der Bahn (T) einstellbar ist.

23. Vorrichtung nach einem der Ansprüche 11 bis 22, wobei das Messer (30) zwei gegenüberliegende Ausnehmungen (31b) aufweist, die entlang der geneigten Bahn (T) angeordnet sind und mit Schneidrändern versehen sind.

24. Vorrichtung nach einem der Ansprüche 11 bis 22, umfassend eine Ausrichteinrichtung (37, 37a), die dazu geeignet ist, die Fördereinrichtung (18) seitlich zu verschieben, um das gummibeschichtete Band (15) relativ zu der Formungstrommel (14), die weiter nachgeschaltet platziert ist, zu zentrieren.

25. Vorrichtung nach dem vorhergehenden Anspruch, wobei die Ausrichteinrichtung (37, 37a) umfasst:
- einen Sensor (37), der zwischen dem zweiten Förderband (20) und dem dritten Förderband (35) angeordnet und dazu geeignet ist, die seitliche Stellung des gummibeschichteten Bands (15) zu erfassen;
- ein Stellglied (37a), das mit dem Sensor (37) wirkverbunden ist und auf die Fördereinrichtung (18) wirkt.

## Revendications

1. Procédé de construction de pneus pour roues de véhicule, comprenant le fait : de former au moins un composant du pneu (2) sur un tambour de formation (14), où ledit composant est formé par le fait :
- d'acheminer un ruban revêtu de caoutchouc (15) sur un transporteur (18) le long d'une direction d'acheminement (A) coïncidant avec la direction d'extension longitudinale (X) dudit ruban revêtu de caoutchouc (15), jusqu'à dépasser une région de coupe dudit transporteur (18) par une longueur prédéterminée (L) ; le ruban revêtu de caoutchouc (15) comprenant une pluralité de fils câblés de renforcement parallèles (10), intégrés dans une matrice de matériau élastomère (11) et inclinés d'un angle prédéterminé (α) par rapport à la direction d'extension longitudinale (X) ;
- de soulever un élément de positionnement (25) placé sous le ruban revêtu de caoutchouc (15) et au niveau de la région de coupe jusqu'à ce qu'un soulèvement du ruban revêtu de caoutchouc (15) se produise ;
- de déplacer une lame (30), placée sur le ruban revêtu de caoutchouc (15) et au niveau de la région de coupe, le long d'une direction de coupe (T), pour graver et couper le ruban revêtu de caoutchouc (15) entre deux fils câblés de renforcement adjacents (10) et sur toute la largeur de celui-ci de manière à former un segment (15a) ;
- de poser le segment (15a) sur le tambour de formation (14) ;
où, avant la coupe, une première partie du ruban revêtu de caoutchouc (15) placée en amont de l'élément de positionnement (25) est déplacée vers l'avant d'un étirement prédéterminé (d), de manière à réduire la tension dudit ruban revêtu de caoutchouc (15) provoquée par le soulèvement de l'élément de positionnement (25),
où, pendant ledit déplacement vers l'avant, le ruban revêtu de caoutchouc (15) s'enroule sur au moins un rouleau (27) appartenant à l'élément de positionnement (25).

2. Procédé tel que revendiqué dans la revendication 1, dans lequel, pendant le déplacement vers l'avant de la première partie, une deuxième partie du ruban revêtu de caoutchouc (15) placée en aval de l'élément de positionnement (25) est stationnaire.

3. Procédé tel que revendiqué dans la revendication 1 ou 2, dans lequel le déplacement vers l'avant de la première partie comprend le fait : d'actionner une première partie (19) du transporteur (18) placée en amont de l'élément de positionnement (25) indépendamment d'une deuxième partie (20) dudit transporteur (18) placée en aval dudit élément de positionnement (25).

4. Procédé tel que revendiqué dans l'une des revendications précédentes, dans lequel l'étirement prédéterminé (d) est essentiellement égal à l'allongement subi par le ruban revêtu de caoutchouc (15) sous l'effet du soulèvement de l'élément de positionnement (25).

5. Procédé tel que revendiqué dans l'une des revendications précédentes, dans lequel l'étirement prédéterminé (d) est compris entre environ 10 mm et environ 100 mm.

6. Procédé tel que revendiqué dans l'une des revendications précédentes, dans lequel, pendant le déplacement le long de la direction de coupe (T), la lame (30) passe entre deux rouleaux libres (27) appartenant à l'élément de positionnement (25).

7. Procédé tel que revendiqué dans l'une des revendications précédentes, dans lequel, après la coupe, le segment (15a) du ruban revêtu de caoutchouc (15) est écarté de la région de coupe.

8. Procédé tel que revendiqué dans la revendication précédente, dans lequel ledit au moins un rouleau (27) est un rouleau libre et dans lequel pendant l'écartement une extrémité qui vient juste d'être coupée (41a) du segment (15a) s'enroule sur ledit rouleau libre (27).

9. Procédé tel que revendiqué dans l'une des revendications précédentes, dans lequel le ruban revêtu de caoutchouc (15) est décalé latéralement pour être centré par rapport au tambour de formation (14) qui est placé plus en aval.

10. Procédé tel que revendiqué dans l'une des revendications précédentes, dans lequel le fait de poser le segment (15a) sur le tambour de formation (14) comprend le fait :
- d'enrouler le segment (15a) autour d'une surface radialement externe (14a) du tambour de formation (14) ;
- de raccorder mutuellement des extrémités opposées dudit segment (15a).

11. Appareil de construction de pneus pour roues de véhicule, comprenant :
- un tambour de formation (14) ;
- un transporteur (18) définissant une surface d'appui (22) pour un ruban revêtu de caoutchouc (15) et ayant une première partie (19) et une deuxième partie (20) disposées consécutivement le long d'une direction d'acheminement (A) ;
- un élément de positionnement (25) placé entre la première partie (19) et la deuxième partie (20), s'étendant le long d'une direction transversale à la direction d'acheminement (A) et verticalement mobile entre une position abaissée à laquelle il est posé sous la surface d'appui (22), et une position surélevée à laquelle il émerge au-delà de ladite surface d'appui (22) ;
- une lame (30) montée au-dessus du transporteur (18), au niveau de l'élément de positionnement (25), et mobile le long d'une trajectoire inclinée (T) par rapport à la direction d'acheminement (A) ;
où le tambour de formation (14) est relié de manière fonctionnelle au transporteur (18) pour recevoir un segment (15a) du ruban revêtu de caoutchouc (15) coupé par la lame (30) ;
où la première partie (19) du transporteur (18) peut être actionnée indépendamment de la deuxième partie (20) ;
où l'élément de positionnement (25) comprend un support (26) et au moins un rouleau (27) monté sur le support (26).

12. Appareil tel que revendiqué dans la revendication précédente, dans lequel ledit au moins un rouleau (27) est un rouleau libre.

13. Appareil tel que revendiqué dans la revendication 11 ou 12, dans lequel ledit au moins un rouleau (27) s'étend sur toute la largeur du transporteur (18).

14. Appareil tel que revendiqué dans la revendication 11, 12 ou 13, dans lequel l'élément de positionnement (25) comprend deux rouleaux (27) dont les axes de rotation (z-z) sont essentiellement alignés de manière consécutive le long de ladite direction transversale.

15. Appareil tel que revendiqué dans la revendication précédente, dans lequel chacun des deux rouleaux (27) est librement monté sur le support (26) indépendamment de l'autre.

16. Appareil tel que revendiqué dans la revendication 14 ou 15, dans lequel les deux rouleaux (27) confinent un passage (28) entre eux pour la lame (30).

17. Appareil tel que revendiqué dans l'une des revendications 11 à 16, dans lequel chacune des deux parties (19, 20) comprend une courroie de transporteur.

18. Appareil tel que revendiqué dans la revendication précédente, dans lequel chacune des deux parties comprend une surface de support continue (23), sur laquelle passe la courroie de transporteur.

19. Appareil tel que revendiqué dans la revendication précédente, dans lequel la surface de support continue (23) comprend des aimants (33).

20. Appareil tel que revendiqué dans la revendication précédente, dans lequel les aimants (33) sont intégrés dans la surface de support continue (23).

21. Appareil tel que revendiqué dans l'une des revendications 11 à 20, dans lequel la trajectoire inclinée (T) de la lame (30) et la direction d'acheminement (A) délimitent un angle d'inclinaison (α) compris entre environ 15° et environ 35°.

22. Appareil tel que revendiqué dans l'une des revendications 11 à 21, dans lequel l'inclinaison de trajectoire (T) est réglable.

23. Appareil tel que revendiqué dans l'une des revendications 11 à 22, dans lequel la lame (30) présente deux évidements opposés (31b) disposés le long de la trajectoire inclinée (T) et dotés d'arêtes de coupe.

24. Appareil tel que revendiqué dans l'une des revendications 11 à 22, comprenant un dispositif d'alignement (37, 37a) adapté pour décaler latéralement le transporteur (18) afin de centrer le ruban revêtu de caoutchouc (15) par rapport au tambour de formation (14) qui est placé plus en aval.

25. Appareil tel que revendiqué dans la revendication précédente, dans lequel le dispositif d'alignement (37, 37a) comprend .
- un capteur (37) disposé entre la deuxième courroie de transporteur (20) et la troisième courroie de transporteur (35) et adapté pour détecter la position latérale du ruban revêtu de caoutchouc (15) ;
- un actionneur (37a) relié de manière fonctionnelle au capteur (37) et agissant sur le transporteur (18).
